# EUROPÄISCHE PATENTANMELDUNG

(11) **EP 1 014 012 A2**
(43) Veröffentlichungstag der Anmeldung: **28.06.2000**
(21) Anmeldenummer: 99123316.4
(22) Anmeldetag: 23.11.1999
(51) Int. Cl.: F24J 3/00

(54) **Heiz-Vorrichtung**

(30) Priorität: 24.12.1998 DE 19860149
(71) Anmelder: Rota System AG, 91344 Waischenfeld (DE); AUDI AG, 85045 Ingolstadt (DE)
(72) Erfinder: Bauer, Hans-Jürgen, 5061 Elsbethen (AT); Teufel, Bernhard, 95515 Plankenfels (DE); Kilian, Günter, 74214 Schöntal-Aschhausen (DE); Bilek, Andreas, 8046 Graz (AT)
(74) Vertreter: Rau, Manfred, Dr. Dipl.-Ing.

(57) **Zusammenfassung**

Eine Heiz-Vorrichtung weist ein Gehäuse (4) mit einem Innenraum (12) auf. Es weist weiterhin einen einerseits als Pumpenrad (14) und andererseits als Wirbelstrom-Scheibe (21) ausgebildeten Rotor (9) und einen mit Permanent-Magneten (30) besetzten Magnet-Träger (23) auf, der undrehbar im Gehäuse (4) angeordnet und in eine Arbeitsstellung unmittelbar benachbart zur Wirbelstrom-Scheibe (21) und eine hiervon entfernte Ruheposition verschiebbar ist. Die Wirbelstrom-Scheibe (21) und der mit Permanent-Magneten (30) besetzte Magnet-Träger (23) sind wasserumspült.

## Beschreibung

Die Erfindung betrifft eine Heiz-Vorrichtung.

Aus der EP 0 313 764 A2 ist eine Heiz-Vorrichtung bekannt, die ein mit einer drehbar in einem Gehäuse gelagerten Rotor-Welle verbundenes, mit Permanent-Magneten besetztes Teil aufweist. Im Gehäuse sind einzelne Weicheisen-Kerne angeordnet. Die Weicheisen-Kerne sind im Innenraum des Gehäuses von einem Wärmeträger, insbesondere Kühlwasser, umströmt. Die Praxis hat gezeigt, daß hiermit nur in geringem Umfang mechanische Energie in Wärme umzusetzen ist.

Aus dem Lexikon 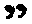 Maschinenbau, VDI Verlag 1995, ISBN 3-18-401372-3, Seite 1430" ist eine Wirbelstrombremse bekannt, bei der es sich um eine berührungslos wirkende elektrische Bremse handelt, die mechanische Energie durch Wirbelströme in einer metallischen Masse in Wärme umsetzt. Ihrem Aufbau nach ist die Wirbelstrombremse eine Gleichstrommaschine vom Innenpoltyp. Hierbei trägt ein feststehender Innenring eine von Gleichstrom durchflossene Spule, die ein homopolares Magnetfeld erzeugt. Ein Ankerring aus elektrisch leitendem Material bildet den aktiven Teil eines Läufers. Bei Drehung des Läufen relativ zu einem Ständer werden im Ankerring Wirbelströme induziert, die zusammen mit dem Ständerfeld ein Bremsmoment hervorrufen, dessen Größe vom Erregerstrom und der Schlupfdrehzahl abhängt. Derartige Wirbelstrombremsen werden unter anderem bei Lastkraftwagen als Zusatzbremse an der Gelenkwelle verwendet.

In der nicht vorveröffentlichten PCT-Anmeldung WO99/10971 ist eine Heiz-Vorrichtung mit einem Gehäuse mit einem Innenraum bekannt, wobei in den Innenraum ein Kühlwasser-Zuflußstutzen und ein Kühlwasser-Abflußstutzen mündet. Im Gehäuse ist eine drehantreibbare Rotor-Welle drehbar gelagen. Es sind zwei koaxial zur Achse angeordnete Teile vorgesehen, von denen ein Teil mit Permanenent-Magneten versehen ist, während ein weiteres Teil aus einem geschlossenen Ring aus elektrisch leitendem Material besteht und zumindest teilweise in dem Innenraum angeordnet ist. Eines dieser Teile ist drehfest als Rotor auf der Rotor-Welle angeordnet. Die Teile sind relativ zueinander unter Freilassung eines Spaltes zwischen den Permanent-Magneten und dem Teil aus elektrisch leitendem Material um eine gemeinsame Achse drehbar.

Aus der DE 196 00 735 A ist eine Kühlwasserpumpe für einen Verbrennungsmotor bekannt, die ein Lagergehäuse für die Welle eines Pumpenrades aufweist. Am äußeren Ende der Welle ist eine Riemenscheibe angebracht. Auf dem Lagergehäuse ist eine als sogenannte Visco-Heizung ausgestaltete Heiz-Vorrichtung als weitgehend selbständiger Zusatz-Bausatz angeordnet.

Der Erfindung liegt die Aufgabe zugrunde, eine Heiz-Vorrichtung so auszugestalten, daß sie besonders einfach aufgebaut und damit betriebssicher ist.

Diese Aufgabe wird erfindungsgemäß durch die Merkmale des Anspruches 1 gelöst Durch die erfindungsgemäßen Maßnahmen wird in einfacher Weise erreicht, daß die Permanent-Magnete zwischen einer Ruheposition, in der keine oder nur noch eine unwesentliche Restinduktion in der Wirbelstrom-Scheibe stattfindet und einer Arbeitsposition, in der in der Wirbelstrom-Scheibe Wirbelströme induziert werden, verschoben werden können. Der Magnet-Träger und die auf ihm sitzenden Permanent-Magnete werden nicht dynamisch belastet.

Die Ansprüche 2 bis 4 geben besonders vorteilhafte Maßnahmen für die Verschiebung des Magnet-Trägers zwischen seiner Ruheposition und der Arbeitsposition wieder. Anstelle hydraulisch beaufschlagbarer Kolben-Zylinder-Antriebe können auch sogenannte Dehnstoff-Elemente als Linear-Antriebe eingesetzt werden, die von der Kühlwassertemperatur gesteuert werden; ihr Nachteil besteht darin, daß sie analog der Kühlwassertemperatur und nicht zwischen zwei diskreten Positionen arbeiten. Weiterhin können als Linear-Antriebe handelsübliche elektrische Schrittmotoren mit einem Spindel-Mutter-Trieb eingesetzt werden.

Die Ansprüche 5 und 6 geben vorteilhafte Ausgestaltungen für den Magnet-Träger wieder. Durch die Maßnahmen nach Anspruch 7 wird ein guter Wärmeübergang von der gesamten Heiz-Einrichtung auf das Kühlwasser erreicht. Die Ansprüche 8 und 9 geben an, wie die Heiz-Vorrichtung mit ihrer Pumpe gleichzeitig als Kühlwasser-Pumpe eines Verbrennungsmotors in diesen integriert werden kann.

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine Draufsicht auf eine Heiz-Vorrichtung nach der Erfindung,
- Fig. 2: einen Querschnitt durch die Heiz-Vorrichtung gemäß der Schnittlinie II in Fig. 1 in gegenüber Fig. 1 vergrößerter Darstellung und
- Fig. 3: einen Teilschnitt durch die Heiz-Vorrichtung gemäß Fig. 2 mit einem abgeänderten Linear-Antrieb.

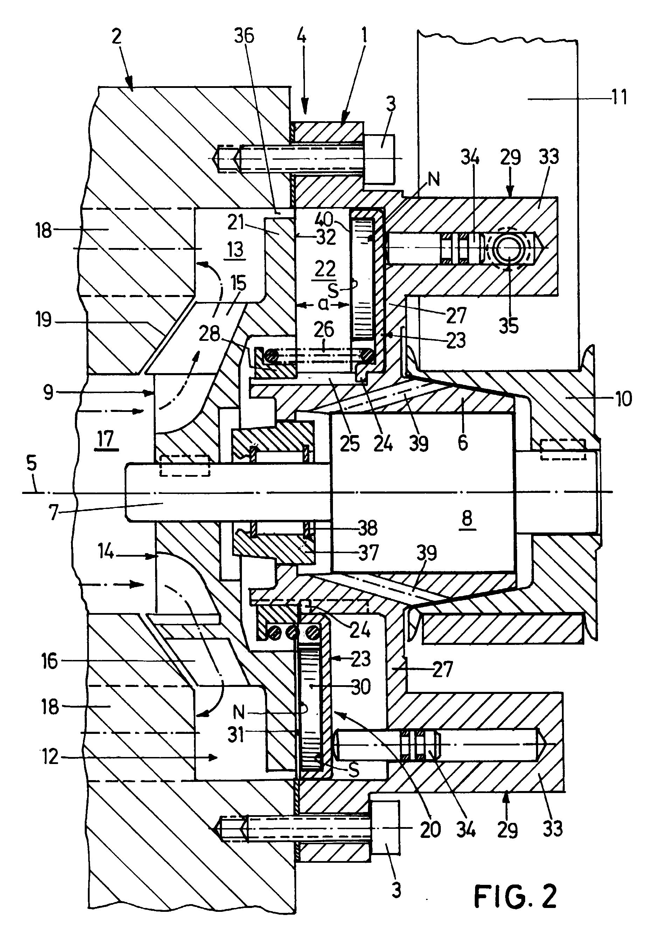

Die in der Zeichnung dargestellte Heiz-Vorrichtung ist in eine Kühlwasserpumpe integriert. Sie weist ein erstes Teil-Gehäuse 1 auf, das mit einem zweiten Teil-Gehäuse 2 mittels Schrauben 3 verbunden ist. Das zweite Teil-Gehäuse 2 wird durch das Motorgehäuse eines wassergekühlten Verbrennungsmotors gebildet. Die Teil-Gehäuse 1, 2 bilden ein Gehäuse 4. Konzentrisch zur Mittel-Längs-Achse 5 des Gehäuses 4 ist am Teil-Gehäuse 1 eine Nabe 6 ausgebildet, in der eine Rotor-Welle 7 mittels eines Lagers 8 drehbar gelagert ist. An ihrem dem zweiten Teil-Gehäuse 2 zugewandten Ende ist an der Rotor-Welle 7 ein Rotor 9 drehfest befestigt. Am außerhalb des ersten Teil-Gehäuses 1 befindlichen Ende ist auf der Rotor-Welle 7 ein Riemenrad 10 drehfest befestigt, über das der Antrieb der Rotor-Welle 7 und damit des Rotors 9 mittels eines Antriebs-Riemens 11 vom Motor her erfolgt. Das Riemenrad 10 übergreift - wie Fig. 2 entnehmbar ist - weitgehend die Nabe 6, wodurch eine sehr kompakte Bauweise erreicht wird. Im Gehäuse 4, und zwar in beiden Teil-Gehäusen 1, 2 ist ein Gehäuse-Innenraum 12 gebildet. Der im Teil-Gehäuse 2 befindliche Teil dieses Innenraums 12 ist als Pumpenraum 13 ausgebildet, in dem sich der dem Teil-Gehäuse 2 zugewandte, als Pumpenrad 14 ausgebildete Teil des Rotors 9 befindet. Das Pumpenrad 14 ist als Radialpumpenrad ausgebildet. Es weist radial-tangential verlaufende Schaufeln 15 auf, die zwischen sich Förderkanäle 16 begrenzen. Die Wasserzufuhr erfolgt durch einen konzentrisch zur Achse 5 verlaufenden, im Teil-Gehäuse 2 ausgebildeten Ansaugkanal 17. Das Wasser wird aus dem Ansaugkanal 17 durch die Förderkanäle 16 radial-tangential nach außen zur Druckseite gefördert und dort durch zwei ebenfalls im Teil-Gehäuse 2 ausgebildete Abführkanäle 18 abgefördert. Die dem Pumpenrad 14 zugeordnete Gehäusewand 19 des Teil-Gehäuses 2 ist der Form der Schaufeln 15 angepaßt und bildet eine Begrenzungswand der Förderkanäle 16.

Im Teil-Gehäuse 1 ist konzentrisch zur Achse 5 eine Wirbelstrom-Heizeinrichtung 20 ausgebildet. Sie weist eine als Induktor wirkende ringförmige Wirbelstrom-Scheibe 21 auf, die einen äußeren ringförmigen Abschnitt des Rotors 9 bildet und auf der Druckseite des Pumpenrades 14 ausgebildet ist. Zumindest die Scheibe 21, in der Regel aber der gesamte Rotor 9, besteht aus elektrisch leitendem Material, beispielsweise Kupfer oder Aluminium. In einem fluchtend mit der Scheibe 21 im ersten Teil-Gehäuse 1 ausgebildeten, ringförmigen Teil-Gehäuseraum 22 des Gehäuse-Innen-raums 12 ist ein ringförmiger, im Querschnitt C-förmig ausgebildeter Magnet-Tragring 23 aus magnetisierbarem Material, beispielsweise Eisen, in Richtung der Achse 5 verschiebbar angeordnet. Der Magnet-Tragring 23 ist an seiner radial innenliegenden Seite mit Führungs-Vorsprüngen 24 versehen, die in entsprechende Führungsnuten 25 der Nabe 6 eingreifen, so daß der Tragring 23 zur Achse 5 zentriert und in Richtung der Achse 5 auf der Nabe 6 verschiebbar, relativ zu dieser aber undrehbar ist. Der Tragring 23 kann sich also nicht mit dem Rotor 9 drehen. Der Tragring 23 ist mittels einer vorgespannten Schrauben-Druckfeder 26 in der Weise belastet, daß er von der Wirbelstrom-Scheibe 21 weg in eine von dieser entfernte, in Fig. 2 oben dargestellte Ruheposition geschoben wird, in der er gegen eine Außenwand 27 des ersten Teil-Gehäuses 1 anliegt. Die Druckfeder 26 stützt sich hierzu gegen einen Anschlag-Ring 28 ab, der innerhalb der Scheibe 21 an der Nabe 6 angebracht ist.

Der Tragring 23 kann mittels Linear-Antrieben 29 gegen die Kraft der Druckfeder 26 in eine in Fig. 2 unten dargestellte zweite Position, die Arbeitsposition, verschoben werden. In dieser Arbeitsposition begrenzen im Magnet-Tragring 23 über dessen Umfang verteilt angeordnete Permanent-Magnete 30 einen Spalt 31 von höchstens einigen wenigen Zehntel Millimeter zur zugewandten ebenen Stirnfläche 32 der Scheibe 21.

Die Linear-Antriebe 29 sind durch hydraulisch beaufschlagbare Kolben-Zylinder-Antriebe gebildet, wobei die Zylinder 33 am Teil-Gehäuse 1 ausgebildet sind und in diesen jeweils ein Kolben 34 abgedichtet geführt ist der gegen den Tragring 23 anliegt. In jeden Zylinder 33 mündet jeweils eine Hydraulik-Leitung 35 ein. Die hydraulische Beaufschlagung wird über Magnetventile angesteuert, die wiederum von der zentralen elektronischen Steuereinheit des Motors angesteuert werden.

Die Magnetisierungsrichtung der Permanent-Magnete 30 verläuft parallel zur Achse 5. Die Magnete 30 sind derart in gleichen Winkelabständen an dem Tragring 23 angebracht, daß jeweils abwechselnd ein Nordpol und ein Südpol der Stirnfläche 32 der Scheibe 21 zugewandt ist. Die Magnete 30 können gleichermaßen als ein Ring ausgebildet sein, in dem in gleichen Winkelabständen mit abwechselnder Magnetisierungsrichtung magnetisierte Bereiche ausgebildet sind.

Zwischen dem Außenumfang der Scheibe 21 und dem Teil-Gehäuse 2 ist ein Ringkanal 36 ausgebildet, so daß das Kühlwasser auch in den der Heizeinrichtung 20 zugehörigen Teil-Gehäuseraum 22 strömen kann. An dem dem Rotor 9 zugewandten Ende der Nabe 6 ist in dieser ein die Welle 7 umgebendes Dichtungsgehäuse 37 ausgebildet, in dem gegen die Welle 7 anliegende Dichtungen 38 angeordnet sind. Zwischen dem Dichtungsgehäuse 37 und dem Lager 8 münden nach außen führende Leckwasserkanäle 39 aus.

Die Magnete 30 sind mit einer Folie 40 aus nichtmagnetischem Material, beispielsweise einer Cr-Ni-Legierung oder Titan oder Aluminium, gegenüber dem Kühlwasser abgedichtet, die an dem Tragring 23 beispielsweise durch Schweißen befestigt ist.

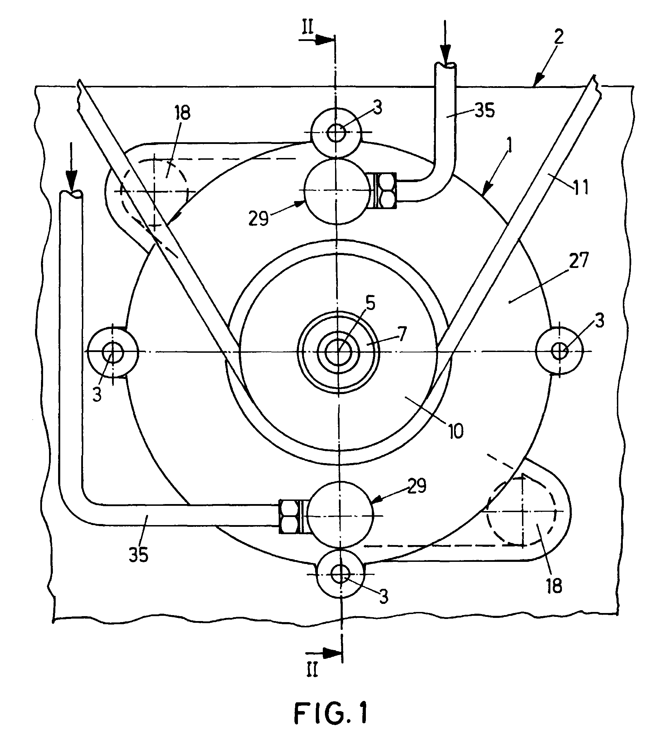

Wenn der Motor läuft, läuft die Kühlwasserpumpe immer mit, d.h. der Rotor 9 mit dem Pumpenrad 14 läuft immer. Wenn die Linear-Antriebe 29 nicht hydraulisch beaufschlagt sind, und sich demzufolge der Magnet-Tragring 23 mit den Permanent-Magneten 30 in der in Fig. 1 oben dargestellten Ruheposition befindet, ist der Abstand a der Permanent-Magnete 30 von der Stirnfläche 32 der Wirbelstrom-Scheibe 21 so groß, daß keine oder keine nennenswerte Induktion in der Scheibe 21 stattfindet. Wenn dagegen die Linear-Antriebe 29 hydraulisch beaufschlagt werden, dann wird der Tragring 23 bis gegen den Anschlag-Ring 28 geschoben. In dieser Arbeitsposition wird der bereits geschilderte Spalt 31 zwischen der Stirnfläche 32 und den Permanent-Magneten 30 gebildet. In der relativ zu den Magneten 30 und insbesondere relativ zu deren Magnetfeldern bewegten Scheibe 21 werden Wirbelströme induziert, die zu einer starken Erhitzung der Scheibe 21 führen. Diese Wärme wird an das Kühlwasser übertragen.

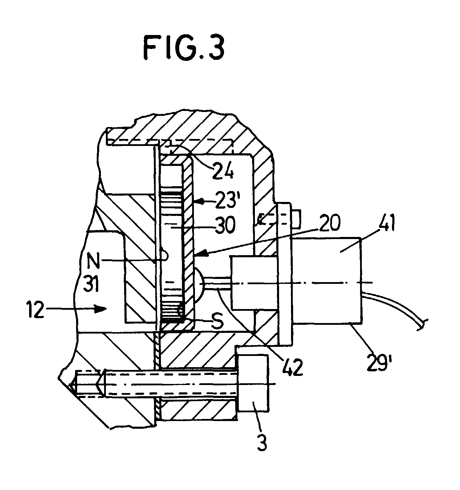

Wie sich aus Fig. 3 ergibt, kann als Linear-Antrieb 29' auch ein elektrischer Schrittmotor 41 vorgesehen sein, der mit einem Spindeltrieb 42 versehen ist, der an dem Magnet-Tragring 23' angebracht ist, so daß die Rückstellung des Magnet-Tragringes 23' aus der in Fig. 2 unten dargestellten Position in die in Fig. 2 oben dargestellte Position mittels des Spindeltriebes 42 erfolgt. Die bei der Ausführung nach Fig. 2 vorgesehene Schrauben-Druckfeder ist daher in diesem Fall nicht erforderlich.

## Patentansprüche

1. Heiz-Vorrichtung
- mit einem Gehäuse (4) mit einem Innenraum (12),
- mit je einem in den Innenraum (12) mündenden Kühlwasser-Zufluß (17) und Kühlwasser-Abfluß (18),
- mit einer im Gehäuse (4) drehbar gelagerten, drehantreibbaren Rotor-Welle (7) mit einer Mittel-Längs-Achse (5),
- mit einem auf der Rotor-Welle (7) drehfest angebrachten Rotor (9), an dem
-- ein Pumpenrad (14) zur Förderung von Kühlwasser vom Kühlwasser-Zufluß (17) zum Kühlwasser-Abfluß (18) und
-- eine Wirbeistrom-Scheibe (21) aus elektrisch leitendem Material einer Wirbelsrom-Heizeinrichtung (20)
ausgebildet ist,
- mit einem im Gehäuse (4) undrehbar angeordneten, mit Permanent-Magneten (30) versehenen Magnet-Träger (23), der in Richtung der Achse (5)
-- in eine Ruheposition in einem Abstand a von der Wirbelstrom-Scheibe (21)und
-- in eine Arbeitsposition unter Freilassung eines sehr schmalen Spaltes (31) zwischen Wirbelstrom-Scheibe (21) und Permanent-Magneten (30) verschiebbar ist.

2. Heiz-Vorrichtung nach Anspruch 1, dadurch gekennzeichnet, daß der Magnet-Träger (23) gegen eine Druckfeder (26) aus der Ruheposition in die Arbeitsposition verschiebbar ist.

3. Heiz-Vorrichtung nach Anspruch 1 oder 2, dadurch gekennzeichnet, daß mindestens ein Linear-Antrieb (29) zur Verschiebung des Magnet-Trägers (23) aus der Ruheposition in die Arbeitsposition vorgesehen ist.

4. Heiz-Vorrichtung nach Anspruch 3, dadurch gekennzeichnet, daß der mindestens eine Linear-Antrieb (29) als hydraulisch beaufschlagbarer Kolben-Zylinder-Antrieb ausgebildet ist.

5. Heiz-Vorrichtung nach einem der Ansprüche 1 bis 4, dadurch gekennzeichnet,
daß der Magnet-Träger als Magnet-Tragring (23) ausgebildet ist.

6. Heiz-Vorrichtung nach einem der Ansprüche 1 bis 5, dadurch gekennzeichnet,
daß der Magnet-Träger (23) undrehbar an einer Nabe (6) des Gehäuses (4) verschiebbar geführt ist.

7. Heiz-Vorrichtung nach einem der Ansprüche 1 bis 6, dadurch gekennzeichnet,
daß der Innenraum (12) durch den Rotor (9) in einen Pumpenraum (13) und einen die Wirbelstrom-Heizeinrichtung (20) aufnehmenden Teil-Gehäuseraum (22) geteilt wird und daß der Pumpenraum (13) und der Teil-Gehäuseraum (22) mit einem Kanal (36) miteinander verbunden sind.

8. Heiz-Vorrichtung nach einem der Ansprüche 1 bis 7, dadurch gekennzeichnet,
daß das Gehäuse (4) aus einem ersten Teil-Gehäuse (1) und einem zweiten Teil-Gehäuse (2) gebildet ist, von denen das zweite Teil-Gehäuse (2) im Motorgehäuse eines wassergekühlten Verbrennungsmotors ausgebildet ist.

9. Heiz-Vorrichtung nach Anspruch 7 und 8, dadurch gekennzeichnet, daß der Pumpenraum (13) und das Pumpenrad (14) im wesentlichen im zweiten Teil-Gehäuse (2) angeordnet sind.

10. Heiz-Vorrichtung nach Anspruch 3, dadurch gekennzeichnet, daß der mindestens eine Linear-Antrieb (29) als elektrischer Schrittmotor ausgebildet ist.

11. Heiz-Vorrichtung nach einem der Ansprüche 1 bis 10, dadurch gekennzeichnet,
daß die Magnete (30) gegenüber dem Kühlwasser abgedichtet sind.

12. Heiz-Vorrichtung nach Anspruch 10, dadurch gekennzeichnet, daß der elektrische Schrittmotor (41) mit einem Spindeltrieb (42) versehen ist, der am Magnet-Träger (23') befestigt ist.
